# EUROPÄISCHE PATENTSCHRIFT

(11) **EP 3 894 238 B1**
(45) Veröffentlichungstag und Bekanntmachung des Hinweises auf die Patenterteilung: **13.09.2023**
(21) Anmeldenummer: 19800931.8
(22) Anmeldetag: 22.10.2019
(51) Int. Cl.: B60C 11/14

(54) **SPIKE UND FAHRZEUGLUFTREIFEN**
SPIKE AND PNEUMATIC VEHICLE TYRE
CRAMPON ET PNEUMATIQUE DE VÉHICULE

(30) Priorität: 13.12.2018 DE 102018221587
(43) Veröffentlichungstag der Anmeldung: 20.10.2021
(73) Patentinhaber: Continental Reifen Deutschland GmbH, 30165 Hannover (DE)
(72) Erfinder: VOIGES, Kristin, 30419 Hannover (DE); WEINREICH, Hajo, 30419 Hannover (DE)
(74) Vertreter: Continental Corporation
(86) Internationale Anmeldenummer: PCT/EP2019/078627
(87) Internationale Veröffentlichungsnummer: WO 2020/119984

(56) Entgegenhaltungen:
- EP-A1- 2 743 301
- EP-B1- 3 707 014
- DE-A1-102015 223 091
- DE-A1-102016 225 427
- DE-A1-102018 211 155
- JP-A- S 588 410

## Beschreibung

Die Erfindung betrifft einen Spike zum Verankern in einem Spikeloch eines Laufstreifens eines Fahrzeugluftreifens mit zumindest einem Fuß und einem darin verankerten Spikepin, wobei der Spike zumindest zum Teil mit zumindest einer vulkanisierten Kautschukmischung und/oder einem thermoplastischen Vulkanisat ummantelt ist. Ferner betrifft die Erfindung einen Fahrzeugluftreifen mit einem Laufstreifen mit derartigen Spikes.

Allgemein sind Fahrzeugluftreifen mit Spikes aus Stahl, Aluminium oder Kunststoffen bereits bekannt und im Einsatz. Die Spikes bestehen dabei häufig aus einem Spikepin mit einem aus der Lauffläche hervorstehenden, freien Ende und einem diesem freien Ende gegenüberliegend angeordneten Fuß, dessen Fläche größer ist, als die des Spikepins.

Die RU 2 148 498 C1 offenbart, dass der Spikepin bis auf das aus der Lauffläche herausragende, freie Ende vollständig in einem Polymerkörper aufgenommen und von diesem umschlossen ist. Das Polymer wird in diesem Fall für die Gewichtsreduktion des Spikes verwendet und bildet im unteren, dem freien Ende des Spikepin gegenüberliegenden Teil den erwähnten Fuß. Der gesamte Spike wird nach seiner Herstellung im Bereich der Lauffläche in den Fahrzeugluftreifen integriert.

Es ist auch bekannt, die Spikes aus einem Gummiwerkstoff herzustellen. Eine derartige Lösung geht beispielsweise aus der JP H08300911 A oder aus der JP 6239112, der EP 0 383 401 A1 beziehungsweise der DE 697 17 544 T2 hervor, wobei gemäß dem Offenbarungsgehalt dieser Schriften in das Gummi zusätzlich Fasermaterialien zur Verfestigung und Verbesserung der Kraftübertragung eingebettet sind. In der Praxis hat sich dies nicht bewährt, da die Fasermaterialien eine ungenügende Abriebbeständigkeit aufweisen, um eine Kraft übertragende Funktion eines Pins über die Lebensdauer eines Fahrzeugluftreifens hinweg übernehmen zu können. Üblicherweise werden die Pins aus Hartmetall hergestellt.

Eine andere Variante von Spikes ist aus der DE 10 2015 223 091 A1 bekannt. Bei diesen ist der Spikepin und/oder der Fuß, die in der Regel aus einem Hartmetall und/oder Aluminium gebildet werden, zumindest abschnittsweise in einen Gummimantel aus einem Gummiwerkstoff integriert. Dadurch soll ein verminderter Spike- und Straßenverschleiß bei reduziertem Eigengewicht erreicht werden. Die Gummiummantelung absorbiert einen gewissen Anteil der Aufschlagenergie.

In der DE 10 2015 223 091 A1 ist offenbart, dass die Shore A-Härte des den Spike ummantelnden Gummimaterials gleich oder unterschiedlich zu der des umgebenden Laufstreifenmaterials sein kann, wobei der Laufstreifen eines typischen Winterreifens eine Shore A-Härte von weniger als 60 Shore A aufweist. Härte-Werte für die Gummiummantelung sind nicht angegeben. Bei der verwendeten Gummimischung für den Mantel des Spikes kann es sich um eine Mischung handeln, die sich von der Laufstreifenmischung unterscheidet. Die Spikes und die Gummiummantelung können unterschiedlichste Formen und Positionen aufweisen.

Weitere mit Gummimaterial ummantelte Spikes sind aus der JP S58 8410 A, aus der EP 3 707 014 B1, aus der DE 10 2018 211155 A1 und der DE 10 2016 225 427 A1 bekannt.

Die EP 2 743 301 A1 offenbart Kautschukmischungen für Laufstreifen von Reifen mit guter Kälteflexibilität.

Ausgehend von diesem Stand der Technik liegt der Erfindung die Aufgabe zugrunde, Spikes für Fahrzeugluftreifen der eingangs genannten Art hinsichtlich der seitlichen Führungskräfte (lateral side force), der Traktion und dem Bremsen auf Eis weiter zu verbessern.

Gelöst wird die Aufgabe erfindungsgemäß dadurch, dass bei den Spikes der eingangsgenannten Art die vulkanisierte Kautschukmischung und/oder das thermoplastische Vulkanisat eine Shore A-Härte gemäß DIN ISO 7619-1 bei Raumtemperatur von 63 bis 78 Shore A aufweist.

Überraschenderweise hat sich für die Shore A-Härte ein Optimum im Hinblick auf die Griffeigenschaften auf eisigem Untergrund ergeben. Bisher war man davon ausgegangen, dass eine möglichst hohe Shore A-Härte bei sonst gleichbleibenden Vulkanisateigenschaften für eine Verbesserung der Spikes hinsichtlich der Griffeigenschaften auf eisigem Untergrund und auch die anderen gewünschten Eigenschaften, wie Spike- und Straßenabrieb von Vorteil ist. Scheinbar ist eine gewisse Beweglichkeit/Nachgiebigkeit des den Spike ummantelnden Materials durch eine spezielle Shore A-Härte für die Eigenschaften vorteilhaft.

Besonders gute seitliche Führungskräfte auf Eis und stark verbesserte Traktion und verbessertes Bremsen auf Eis werden erreicht, wenn die vulkanisierte Kautschukmischung und/oder das thermoplastische Vulkanisat der Ummantelung eine Shore A-Härte gemäß DIN ISO 7619-1 bei Raumtemperatur von 63 bis 78 Shore A aufweist

Gemäß der Erfindung ist der Spike zumindest zum Teil mit zumindest einer vulkanisierten Kautschukmischung und/oder zumindest einem thermoplastischen Vulkanisat ummantelt. Unter thermoplastischen Vulkanisaten werden dabei Verschnitte aus Thermoplasten und vernetzten Elastomeren verstanden, die sich bei im Bereich üblicher Gebrauchstemperaturen gummielastisch verhalten, sich jedoch bei höheren Temperaturen thermoplastisch verarbeiten lassen. Thermoplastische Vulkanisate (TPV) werden auch als Elastomerlegierungen bezeichnet.

Es ist bevorzugt, wenn der Thermoplast bzw. die Thermoplaste des thermoplastischen Vulkanisates aus der Gruppe bestehend aus Polyurethan, Polypropylen, Polystyrol, Polyamid und Acrylnitril-Butadien-Styrol-Copolymer ausgewählt sind. Diese Thermoplaste verleihen dem thermoplastischen Vulkanisat eine vorteilhafte Härte.

Vorzugsweise liegt dem Elastomer des thermoplastischen Vulkanisates eine Kautschukmischung zu Grunde, welche als Kautschuk(e) zumindest einen der Kautschuke ausgewählt aus der Gruppe bestehend aus Naturkautschuk (NR), synthetisches Polyisopren (IR), Polybutadien (BR), Styrol-Butadien-Kautschuk (SBR) und Nitril-Butadien-Kautschuk (NBR) enthält. Es handelt sich dabei um Kautschuke, die auch in Kautschukmischungen von Laufstreifen Verwendung finden, wodurch eine gute Verbindung des Spikekörpers zum Gummimaterial des Laufstreifens unterstützt wird.

Gemäß einer bevorzugten Weiterbildung der Erfindung ist der Spike zumindest zum Teil mit einer vulkanisierten Kautschukmischung ummantelt. Auf diese Weise kann der Spikekörper hervorragend an das umgebende Material des Laufstreifens des Fahrzeugluftreifens angepasst werden.

Die vulkanisierte Kautschukmischung enthält vorzugsweise zumindest einen Dienkautschuk, einen Füllstoff, einen Weichmacher und Vernetzungsreagenzien. Mit diesen Inhaltsstoffen kann das ummantelnde Material auf die erfindungsgemäße Härte eingestellt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Besonders bevorzugt enthält die Kautschukmischung 40 bis 80 phr natürliches Polyisopren (NR) und/oder synthetisches Polyisopren (IR) und 20 bis 60 phr Butadien-Kautschuk (BR).

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Die Kautschukmischung kann unterschiedliche Füllstoffe, wie Ruße, Kieselsäuren, Alumosilicate, Kreide, Stärke, Fasern, Kohlenstoffnanoröhren, Graphit, Graphene, Magnesiumoxid, Titandioxid oder Kautschukgele in üblichen Mengen bis 250 phr enthalten, wobei die Füllstoffe in Kombination eingesetzt werden können.

Wird Ruß in der Kautschukmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Zu den Weichmachern zählen Weichmacheröle oder Weichmacherharze. Prozesshilfsmittel, wobei hierunter Öle und andere viskositätssenkende Substanzen verstanden werden. Es kann sich bei diesen Prozesshilfsmitteln beispielsweise um Weichmacheröle oder Weichmacherharze handeln.
Weichmacheröle sind beispielsweise aromatische, naphthenische oder paraffinische Mineralölweichmacher, wie z.B. MES (mild extraction solvate) oder TDAE (treated distillate aromatic extract), natürliche Öle, wie z. B. Rapsöl, oder Rubber-to-Liquid-Öle (RTL) oder Biomass-to-Liquid-Öle (BTL) oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Zu den Weichmacherharzen zählen beispielsweise Kohlenwasserstoffharze.

Zu den in der Kautschukmischung vorhandenen Vernetzungsagenzien zählen alle dem Fachmann bekannten Substanzen. Vorzugsweise handelt es sich um Schwefel und/oder Schwefelspender, die im letzten Mischungsschritt in den vom Fachmann gebräuchlichen Mengen (0,4 bis 8 phr) der Kautschukmischung zugesetzt werden.

Die Kautschukmischung kann zudem vulkanisationsbeeinflussende Substanzen wie Vulkanisationsbeschleuniger, Vulkanisationsverzögerer und Vulkanisationsaktivatoren in üblichen Mengen enthalten. Diese werden zugesetzt, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.
Auch weitere netzwerkbildende Systeme, wie z. B. Vulkuren^{®}, Duralink^{®}, Perkalink^{®} oder Systeme, wie sie in der WO 2010/049261 A2 beschrieben sind, können in der Gummierungsmischung eingesetzt werden.

Neben den bereits genannten Substanzen kann die Kautschukmischung für die Ummantelung der Spikes übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, Haftsysteme, wie z. B. solche auf der Basis von Resorcin und Formaldehyd, und Mastikationshilfsmittel, wie z. B. 2,2'-Dibenzamidodiphenyldisulfid (DBD).

Gemäß einer vorteilhaften Weiterbildung der Erfindung wird die Shore A-Härte der vulkanisierten Kautschukmischung für die Ummantelung der Spikes durch den Füllgrad mit Füllstoff und/oder den Vernetzungsgrad und/oder den Weichermacheranteil eingestellt. Mit Hilfe dieser Maßnahmen gelingt die Einstellung der Shore A-Härte auf einfache Weise, ohne dass andere Mischungszuschlagstoffe verändert werden müssen. Besonders bevorzugt ist die Einstellung der Shore A-Härte durch den Weichmacheranteil, da dann andere Vulkanisations- und Vulkanisateigenschaften in möglichst geringen Maße beeinflusst werden.

Gemäß einer weiteren vorteilhaften Weiterbildung der Erfindung entspricht die vulkanisierte Kautschukmischung für die Ummantelung der Spikes hinsichtlich der enthaltenen Dienkautschuke der Mischung des umgebenden Laufstreifens. Auf diese Weise werden Unverträglichkeiten zwischen den Kautschukmischungen vermieden.

Es hat sich zusätzlich als vorteilhaft erwiesen, wenn die vulkanisierte Kautschukmischung rollwiderstandsreduziert ist, d. h. im Fahrbetrieb zu einem reduzierten Rollwiderstand beiträgt. Auf diese Weise hat man einen geringeren Energieverlust.

Die Kautschukmischung kann bevorzugt dadurch rollwiderstandreduziert ausgebildet werden, dass sie als Füllstoff Kieselsäure enthält.

Der Rollwiderstand der kieselsäurehaltigen Kautschukmischung kann weiter reduziert werden, wenn sie zumindest ein Silan-Kupplungsagens enthält. Dieses dient zur Anbindung des Füllstoffes an den Kautschuk.

Spikes für Fahrzeugluftreifen können in ihrer Form unterschiedlich ausgebildet sein. So zeigt die DE 10 20015 223 091 A1 einige mögliche Formen von Spikes, Spikepins und Spikefüßen.

Gemäß der Erfindung ist der Spike zumindest zum Teil mit zumindest einer vulkanisierten Kautschukmischung und/oder zumindest einem thermoplastischen Vulkanisat ummantelt. An einem Spike können demnach auch mehrere verschiedene Kautschukmischungen und/oder thermoplastische Vulkanisate an unterschiedlichen Stellen eingesetzt werden.

Der Spike kann zum einem vollständig von der vulkanisierten Kautschukmischung und/oder dem thermoplastischen Vulkanisat ummantelt sein. So lässt sich ein Spike einfach z. B. durch Umspritzen mit einer unvulkanisierten Kautschukmischung und anschließende Vulkanisation herstellen. Das Umspritzen kann von verschiedenen Positionen aus erfolgen, z. B. vom Fuß oder vom Spikepin her.

Zum anderen ist es auch möglich, dass nur der Spikepin und/oder der Fuß zumindest teilweise von der vulkanisierten Kautschukmischung und/oder dem thermoplastischen Vulkanisat ummantelt ist bzw. sind. Vorteilhaft ist, wenn jener Teil, der für die Verankerung des Spikes im Gummimaterial des Laufstreifens hauptsächlich verantwortlich ist, nämlich der Fußflansch, eine Ummantelung aus der vulkanisierten Kautschukmischung und/oder dem thermoplastischen Vulkanisat aufweist.

Die Ummantelung mit der vulkanisierten Kautschukmischung und/oder dem thermoplastischen Vulkanisat kann unterschiedliche Außenformen aufweisen, so kann diese zumindest abschnittsweise eine kreiszylindrische, kegelige, unrunde, polygonale beziehungsweise konische und/oder taillierte Außenform aufweisen. Hinterschneidungen oder Taillierungen verbessern dabei die Haftung des Spikes in der Lauffläche des Fahrzeugluftreifens.

Die Herstellung der erfindungsgemäßen Spikes erfolgt nach dem Fachmann bekannten Verfahren. So kann beispielsweise ein Spike aus einem Hartmetall und/oder Aluminium in eine Vorrichtung zum Halten des Spikes eingespannt und anschließend mit einer unvulkanisierten Kautschukmischung und/oder einem thermoplastischen Vulkanisat zumindest teilweise umspritzt werden. Gegebenenfalls kann auf die Bereiche des Spikes, die ummantelt werden ein Haftvermittler aufgebracht werden. Danach erfolgt die Vulkanisation. Ein so hergestellter Spike wird üblicherweise mit Hilfe von Bespikungsrobotern in die Außenoberfläche eines fertig vulkanisierten Fahrzeugluftreifen eingebracht und/oder eingeklebt. Als Klebstoffe dienen z. B. Reaktivklebstoffe oder Schmelzklebstoff für die Gummi-Gummi- bzw. Gummi-Metall-Haftung.

Die Erfindung betrifft ferner einen Fahrzeugluftreifen mit einem Laufstreifen mit Spikes, die erfindungsgemäß ausgeführt sind.

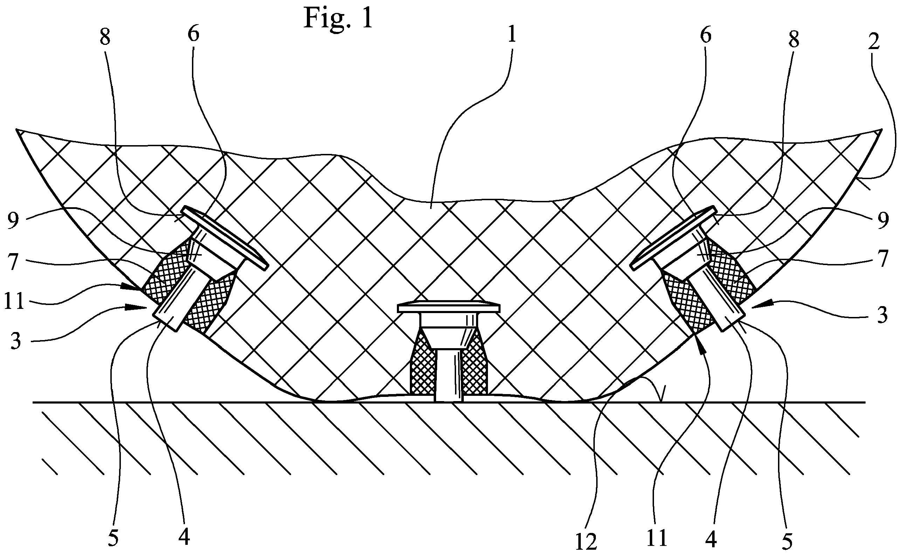

Weitere Merkmale, Vorteile und Einzelheiten der Erfindung werden nun anhand der Zeichnung, die ein Ausführungsbeispiel darstellt und der nachstehenden Tabelle näher beschrieben. Dabei zeigt die Fig. 1 ausschnittsweise und im Schnitt einen seitlichen Blick auf einen bespikten Fahrzeugluftreifen mit Untergrundberührung.

Die Figur 1 zeigt ausschnittsweise und im Schnitt einen seitlichen Blick auf einen bespikten Fahrzeugluftreifen 1, der auf einem Untergrund 12 abrollt und entlang seines Umfanges eine Vielzahl einzelner Spikes 3 aufweist. Jeder der Spikes 3 ist dabei in die profilierte Lauffläche 2 des Fahrzeugluftreifens 1 eingesetzt, wobei lediglich ein freies Ende 5 eines Spikepins 4 des Spikes 3 aus der Lauffläche 2 des Fahrzeugluftreifens 1 hervorsteht. Der Spikepin 4 besteht im vorliegenden Fall aus einem Hartmetall, bei dem es sich beispielsweise um Wolframkarbid handeln kann, was hierbei problemlos möglich ist, weil der Spike 3 insgesamt von einem Gummimantel 7 umgeben wird, der in eine korrespondierende Ausnehmung 11 der Lauffläche 2 eingepresst ist. An der dem freien Ende 5 des Spikepins 4 gegenüberliegenden Seite des Spikes 3 weist dieser einen Fuß 6 mit einer Oberfläche 8 auf, dessen projizierte Fläche oder Querschnittsfläche größer ist, als die des Spikepins 4. Der Fuß 6 des Spikes 3 geht, in axialer Richtung betrachtet, in einen Absatz 9 über, der einerseits als Haftfläche für den Gummimantel 7 und andererseits zur Verbindung mit dem Spikepin 4 dient. Der Spikepin 4 wird in den Absatz 9 eingefügt beziehungsweise eingepresst oder über eine stoffschlüssige Verbindung mit dem Absatz 9 verbunden.

In der Tabelle 1 sind Beispielkautschukmischungen für die Ummantelung 7 von Spikes 3 angegeben. Vergleichsmischungen sind mit V, Mischungen für erfindungsgemäße Spikes 3 sind mit E gekennzeichnet. Die Mischungen wurden durch Variation des Weichmacheranteils in ihrer Shore A-Härte verändert.

Die Mischungsherstellung erfolgte unter üblichen Bedingungen unter Herstellung einer Grundmischung und anschließend der Fertigmischung in einem Labortangentialmischer.

Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei Raumtemperatur gemäß DIN ISO 4662

Ferner wurden mit den Mischungen der Tabelle 1 Spikes 3 gemäß der Figur 1 im Bereich des Spikepins 4 und beim Absatz 9 zum Fuß 6, nämlich am Fußflansch, mit den Kautschukmischungen umspritzt, vulkanisiert und in einen Fahrzeugluftreifen 1 der Dimension 205/55 R 16 mit Hilfe eines Spikeroboters und anschließendem Autoklavieren eingeklebt.

Mit diesen Reifen wurden objektive Brems- und Traktionsversuche sowie Versuche zur seitlichen Führungskraft auf Eis gemäß folgender Versuchsbeschreibungen durchgeführt:
Bremsen: ABS-Bremsversuche und Auswertung der mittleren Verzögerung in einem vorgegebenen Geschwindigkeitsbereich.
Traktion: Beschleunigen mit Traktionskontrollsystem (ASR) und Auswertung der mittleren Beschleunigung in einem vorgegebenen Geschwindigkeitsbereich.
Seitenführung: Schnelles Einlenken aus Geradeausfahrt bei konstanter, vorgegebener Geschwindigkeit, Messung der Querbeschleunigung in einem konstanten Zeitintervall nach dem Anlenken.

Das Verhalten der Mischung 1(V) wurde als 100 % gesetzt. Werte größer Hundert bedeuten eine Verbesserung der entsprechenden Eigenschaft.

**Tabelle 1**

| **Bestandteile** | **Einheit** | **1(V)** | **2(E)** | **3(V)** |
|---|---|---|---|---|
| Polyisopren | phr | 60 | 60 | 60 |
| Polybutadien | phr | 40 | 40 | 40 |
| Ruß N121 | phr | 8 | 8 | 8 |
| Kieselsäure^{a)} | phr | 103 | 103 | 103 |
| Weichmacher | phr | 6 | 25 | 58 |
| Vulkanisationsaktivatoren und Alterungsschutzmittel | phr | 10 | 10 | 10 |
| Prozesshilfsmittel (Calciumseifen und Fettsäureamide) | phr | 2 | 2 | 2 |
| Silan-Kupplungsagens^{b)} | phr | - | - | - |
| Beschleuniger | phr | 4,1 | 4,1 | 4,1 |
| Schwefel | phr | 1,8 | 1,8 | 1,8 |

| **Eigenschaften** | | | | |
|---|---|---|---|---|
| Shore A-Härte bei RT | Shore A | 83 | 73 | 56 |
| Rückprallelastizität. bei RT | % | 37 | 36 | 35 |

| **Reifeneigenschaften** | | | | |
|---|---|---|---|---|
| Traktion und Bremsen auf Eis | % | 100 | 106 | 102 |
| Seitliche Führungskräfte auf Eis | % | 100 | 103 | 100 |

| | | | | |
|---|---|---|---|---|
| a) Ultrasil^{®} VN3 der Firma Evonik b) Geblocktes Mercaptosilan, NXT-Silan der Firma Momentive | | | | |

Aus der Tabelle 1 wird ersichtlich, dass sich die Reifen mit Spikes, die mit einer Mischung mit einer Shore A-Härte von 73 Shore A ummantelt sind, durch ein deutlich verbessertes Traktions- und Bremsverhalten auf Eis und auch durch verbesserte seitliche Führungskräfte auf Eis auszeichnen. Bei gleicher Dämpfung (gleicher Rückprallelastizität) zeigen Reifen, deren Spikes mit einer härteren (1(V)) bzw. weicheren Mischung (3(V)) ummantelt sind keine derartige Verbesserung der Eigenschaften. Außerdem wurde festgestellt, dass die Reifen mit den erfindungsgemäßen Spikes ein deutlich verbessertes Geräuschverhalten und ein verbessertes Fahrverhalten auf Eis aufweisen.

### Bezugszeichenliste

- 1: Fahrzeugluftreifen
- 2: Lauffläche, Laufstreifen
- 3: Spike
- 4: Spikepin
- 5: Freies Ende (Spitze)
- 6: Fuß
- 7: Gummimantel
- 8: Oberfläche des Fußes
- 9: Absatz
- 11: Ausnehmung (in der Lauffläche), Spikeloch
- 12: Untergrund

## Patentansprüche

1. Spike (3) zum Verankern in einem Spikeloch (11) eines Laufstreifens (2) eines Fahrzeugluftreifens (1) mit zumindest einem Fuß (6) und einem darin verankerten Spikepin (4), wobei der Spike (3) zumindest zum Teil mit zumindest einer vulkanisierten Kautschukmischung und/oder zumindest einem thermoplastischen Vulkanisat ummantelt ist, **dadurch gekennzeichnet, dass** die vulkanisierte Kautschukmischung und/oder das thermoplastische Vulkanisat eine Shore A-Härte gemäß DIN ISO 7619-1 bei Raumtemperatur von 63 bis 78 Shore A aufweist.

2. Spike (3) nach Anspruch 1, **dadurch gekennzeichnet, dass** die vulkanisierte Kautschukmischung und/oder das thermoplastische Vulkanisat eine Shore A-Härte gemäß DIN ISO 7619-1 bei Raumtemperatur von 67 bis 77 Shore A aufweist.

3. Spike (3) nach Anspruch 1 oder 2, **dadurch gekennzeichnet, dass** der Spike (3) zumindest zum Teil mit einer vulkanisierten Kautschukmischung ummantelt ist.

4. Spike (3) nach Anspruch 3, **dadurch gekennzeichnet, dass** die vulkanisierte Kautschukmischung zumindest einen Dienkautschuk, einen Füllstoff, einen Weichmacher und Vernetzungsagenzien enthält.

5. Spike (3) nach Anspruch 4, **dadurch gekennzeichnet, dass** die Shore A-Härte der vulkanisierten Kautschukmischung durch den Füllgrad mit Füllstoff und/oder den Vernetzungsgrad und/oder den Weichmacheranteil eingestellt ist.

6. Spike (3) nach Anspruch 4 oder 5, **dadurch gekennzeichnet, dass** die vulkanisierte Kautschukmischung hinsichtlich der enthaltenden Dienkautschuke der Mischung des umgebenden Laufstreifens entspricht.

7. Spike (3) nach zumindest einem der Ansprüche 3 bis 6, **dadurch gekennzeichnet, dass** die vulkanisierte Kautschukmischung rollwiderstandsreduziert ist.

8. Spike (3) nach zumindest einem der Ansprüche 3 bis 7, **dadurch gekennzeichnet, dass** die vulkanisierte Kautschukmischung als Füllstoff Kieselsäure enthält.

9. Spike (3) nach Anspruch 8, **dadurch gekennzeichnet, dass** die vulkanisierte Kautschukmischung zumindest ein Silan-Kupplungsagens enthält.

10. Spike (3) nach zumindest einem der vorhergehenden Ansprüche, **dadurch gekennzeichnet, dass** der Spike (3) vollständig von der vulkanisierten Kautschukmischung und/oder dem thermoplastischen Vulkanisat ummantelt ist.

11. Spike (3) nach zumindest einem der vorhergehenden Ansprüche 1 bis 9, **dadurch gekennzeichnet, dass** zumindest der Spikepin (4) zumindest teilweise von der vulkanisierten Kautschukmischung und/oder dem thermoplastischen Vulkanisat ummantelt ist.

12. Spike nach zumindest einem der vorhergehenden Ansprüche 1 bis 9, **dadurch gekennzeichnet, dass** zumindest der Fuß (6) zumindest teilweise von der vulkanisierten Kautschukmischung und/oder dem thermoplastischen Vulkanisat ummantelt ist.

13. Fahrzeugluftreifen (1) mit einem Laufstreifen (2) mit Spikes (3), die gemäß zumindest einem der vorhergehenden Ansprüche ausgeführt sind.

## Claims

1. Spike (3) for anchoring in a spike hole (11) of a tread (2) of a pneumatic vehicle tyre (1), having at least a base (6) and a spike pin (4) anchored therein, the spike (3) being at least partly ensheathed with at least one vulcanized rubber mixture and/or at least one thermoplastic vulcanizate, **characterized in that** the vulcanized rubber mixture and/or the thermoplastic vulcanizate has a Shore A hardness to DIN ISO 7619-1 at room temperature of 63 to 78.

2. Spike (3) according to Claim 1, **characterized in that** the vulcanized rubber mixture and/or the thermoplastic vulcanizate has a Shore A hardness to DIN ISO 7619-1 at room temperature of 67 to 77.

3. Spike (3) according to Claim 1 or 2, **characterized in that** the spike (3) is at least partly ensheathed with a vulcanized rubber mixture.

4. Spike (3) according to Claim 3, **characterized in that** the vulcanized rubber mixture comprises at least a diene rubber, a filler, a plasticizer and crosslinking agents.

5. Spike (3) according to Claim 4, **characterized in that** the Shore A hardness of the vulcanized rubber mixture is adjusted by the fill level with filler and/or the degree of crosslinking and/or the plasticizer content.

6. Spike (3) according to Claim 4 or 5, **characterized in that** the vulcanized rubber mixture corresponds to the mixture of the surrounding tread in terms of the diene rubbers present.

7. Spike (3) according to at least one of Claims 3 to 6, **characterized in that** the vulcanized rubber mixture has reduced rolling resistance.

8. Spike (3) according to at least one of Claims 3 to 7, **characterized in that** the vulcanized rubber mixture comprises silica as filler.

9. Spike (3) according to Claim 8, **characterized in that** the vulcanized rubber mixture comprises at least one silane coupling agent.

10. Spike (3) according to at least one of the preceding claims, **characterized in that** the spike (3) is fully ensheathed by the vulcanized rubber mixture and/or the thermoplastic vulcanizate.

11. Spike (3) according to at least one of the preceding Claims 1 to 9, **characterized in that** at least the spike pin (4) is at least partly ensheathed by the vulcanized rubber mixture and/or the thermoplastic vulcanizate.

12. Spike according to at least one of the preceding Claims 1 to 9, **characterized in that** at least the base (6) is at least partly ensheathed by the vulcanized rubber mixture and/or the thermoplastic vulcanizate.

13. Pneumatic vehicle tyre (1) with a tread (2) with spikes (3) executed according to at least one of the preceding claims.

## Revendications

1. Crampon (3) pour l'ancrage dans un trou de crampon (11) d'une bande de roulement (2) d'un pneumatique de véhicule (1) avec au moins une base (6) et une broche (4) de crampon ancrée dans celle-ci, le crampon (3) étant enveloppé au moins en partie par au moins un mélange de caoutchouc vulcanisé et/ou au moins un vulcanisat thermoplastique, **caractérisé en ce que** le mélange de caoutchouc vulcanisé et/ou le vulcanisat thermoplastique présente une dureté Shore A selon la norme DIN ISO 7619-1 à température ambiante de 63 à 78 Shore A.

2. Crampon (3) selon la revendication 1, **caractérisé en ce que** le mélange de caoutchouc vulcanisé et/ou le vulcanisat thermoplastique présente une dureté Shore A selon la norme DIN ISO 7619-1 à température ambiante de 67 à 77 Shore A.

3. Crampon (3) selon la revendication 1 ou 2, **caractérisé en ce que** le crampon (3) est enveloppé au moins en partie par un mélange de caoutchouc vulcanisé.

4. Crampon (3) selon la revendication 3, **caractérisé en ce que** le mélange de caoutchouc vulcanisé contient au moins un caoutchouc de diène, une charge, un plastifiant et des agents de réticulation.

5. Crampon (3) selon la revendication 4, **caractérisé en ce que** la dureté Shore A du mélange de caoutchouc vulcanisé est ajustée par le degré de remplissage avec la charge et/ou le degré de réticulation et/ou la proportion de plastifiant.

6. Crampon (3) selon la revendication 4 ou 5, **caractérisé en ce que** le mélange de caoutchouc vulcanisé correspond au mélange de la bande de roulement environnante en termes des caoutchoucs de diène contenus.

7. Crampon (3) selon au moins l'une quelconque des revendications 3 à 6, **caractérisé en ce que** le mélange de caoutchouc vulcanisé est à résistance au roulement réduite.

8. Crampon (3) selon au moins l'une quelconque des revendications 3 à 7, **caractérisé en ce que** le mélange de caoutchouc vulcanisé contient de la silice en tant que charge.

9. Crampon (3) selon la revendication 8, **caractérisé en ce que** le mélange de caoutchouc vulcanisé contient au moins un agent de couplage de silane.

10. Crampon (3) selon au moins l'une quelconque des revendications précédentes, **caractérisé en ce que** le crampon (3) est totalement enveloppé par le mélange de caoutchouc vulcanisé et/ou le vulcanisat thermoplastique.

11. Crampon (3) selon au moins l'une quelconque des revendications précédentes 1 à 9, **caractérisé en ce qu'**au moins la broche (4) de crampon est enveloppée au moins partiellement par le mélange de caoutchouc vulcanisé et/ou le vulcanisat thermoplastique.

12. Crampon selon au moins l'une quelconque des revendications précédentes 1 à 9, **caractérisé en ce qu'**au moins la base (6) est enveloppée au moins partiellement par le mélange de caoutchouc vulcanisé et/ou le vulcanisat thermoplastique.

13. Pneumatique de véhicule (1) comportant une bande de roulement (2) comportant des crampons (3), qui sont réalisés selon au moins l'une quelconque des revendications précédentes.
